# EUROPEAN PATENT SPECIFICATION

(11) **EP 3 192 675 B1**
(45) Date of publication and mention of the grant of the patent: **19.12.2018**
(21) Application number: 15840254.5
(22) Date of filing: 11.09.2015
(51) Int. Cl.: B60C 13/00

(54) **PNEUMATIC TIRE**
LUFTREIFEN
PNEU

(30) Priority: 11.09.2014 JP 2014185310
(43) Date of publication of application: 19.07.2017
(73) Proprietor: Bridgestone Corporation, Tokyo 104-8340 (JP)
(72) Inventor: IWABUCHI, Sotaro, Tokyo 104-8340 (JP)
(74) Representative: Oxley, Robin John George
(86) International application number: PCT/JP2015/004642
(87) International publication number: WO 2016/038899

(56) References cited:
- WO-A1-2011/138867
- JP-A- H09 315 111
- JP-A- H10 147 114
- JP-A- H10 147 114
- JP-A- H11 291 722
- JP-A- 2001 191 745
- JP-A- 2001 191 745
- JP-A- 2010 052 585

## Description

### TECHNICAL FIELD

This disclosure relates to a pneumatic tire.

### BACKGROUND

In recent years, for reasons such as consideration for environmental issues, efforts have been made to reduce the weight of pneumatic tires (also referred to below simply as tires) in order to improve the fuel efficiency of tires. The weight has been reduced by, for example, making the sidewall portions thinner.

Upon making the sidewall portions thinner, however, unevenness occurring at positions corresponding to the edge of a member may become conspicuous on the outer surface of the sidewall portion.

To address this issue, various techniques have been proposed to provide ridges on the sidewall portion of the tire to make the unevenness occurring on the outer surface of the sidewall portion less noticeable (for example, see JP 2011-126335 A (PTL 1)). In such techniques, there is a demand for improving the appearance, such as the visibility of the sidewall portion, when providing ridges. Attention is also drawn to the disclosures of JPH10-147114, JP2001-191745, WO2011/138867 and JPH09-315111.

### CITATION LIST

### Patent Literature

PTL 1: JP 2011-126335 A

### SUMMARY

### (Technical Problem)

Therefore, it would be helpful to provide a pneumatic tire that makes unevenness of the sidewall portion less noticeable and improves the appearance of the sidewall portion.

### (Solution to Problem)

The present invention provides a pneumatic tire according to claim 1.

The "central position of the recess in the tire radial direction" refers to the position on a line connecting the midpoints of the width in the tire radial direction of the recess.

Stating "extends in an intersecting direction" refers not only to the case of the virtual line actually intersecting the boundary line, but also to the case of the virtual line and the boundary line being skew lines.

The "width of the land portion" described below refers to the width in a direction intersecting the extending direction of the land portion in a side view of the tire.

There are two boundary lines between a land portion and the two recesses that define the land portion, and the "extending direction of the land portion" refers to the direction of a straight line formed by connecting the midpoint between the adjacent ends of the boundary lines at one side and the midpoint between the adjacent ends at the other side.

### (Advantageous Effect)

According to this disclosure, a pneumatic tire that makes unevenness of the sidewall portion less noticeable and improves the appearance of the sidewall portion can be provided.

### BRIEF DESCRIPTION OF THE DRAWINGS

In the accompanying drawings:
FIG. 1 is a partial side view of the sidewall portion of a pneumatic tire according to a First Embodiment of this disclosure;
FIG. 2 is a perspective view illustrating an enlargement of a portion of the recess 2b in FIG. 1 and its surroundings;
FIG. 3 is a partial side view of the sidewall portion of a pneumatic tire according to a Second Embodiment of this disclosure, which is not according to the present invention, but which is useful for understanding the present invention; and
FIG. 4 is a partial side view of the sidewall portion of a pneumatic tire according to a Third Embodiment of this disclosure.

### DETAILED DESCRIPTION

The following describes embodiments of this disclosure in detail with reference to the drawings. The tire of this disclosure includes a pair of sidewall portions respectively continuous with the sides of a tread and extending inward in the tire radial direction and a pair of bead portions continuous with the tire radial inside of the sidewall portions. The internal structure of the tire is similar to that of a known tire, and therefore further details are omitted.

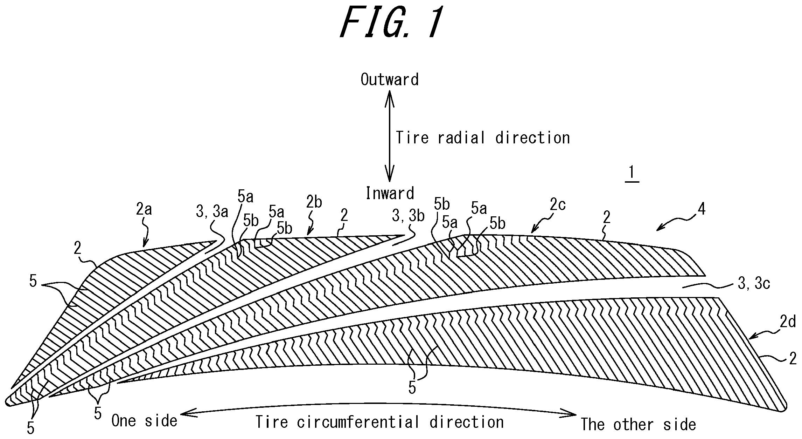

FIG. 1 is a partial side view of the sidewall portion 1 of a pneumatic tire according to a First Embodiment of this disclosure. As illustrated in FIG. 1, this tire includes one or more (one in the illustrated range) approximately rectangular decoration bands 4 formed on an outer surface of the sidewall portion 1, extending in the tire circumferential direction and comprising a plurality of recesses 2 recessed from the outer surface towards the inside of the tire and land portions 3 defined between the recesses.

In the example in FIG. 1, the decoration band 4 has four recesses 2a to 2d. In the illustrated example, the recesses 2a to 2d all start in an area that is inward in the tire radial direction and on one side in the tire circumferential direction and extend from that area outward in the tire radial direction and towards the other side in the tire circumferential direction. In the illustrated example, the recess 2a, recess 2b, recess 2c, and recess 2d are shaped increasingly along the tire circumferential direction in this order.

As illustrated in FIG. 1, the recesses 2a to 2d have an approximately polygonal shape in this planar view. In the example illustrated in FIG. 1, the area of the recess 2a is smallest in this planar view, and the area increases in the order of the recesses 2b, 2c, and 2d.

In the example illustrated in FIG. 1, the decoration band 4 has three land portions 3 defined between adjacent recesses 2. In the illustrated example, the land portions 3a to 3d all start in an area that is inward in the tire radial direction and on one side in the tire circumferential direction and extend from that area outward in the tire radial direction and towards the other side in the tire circumferential direction. In the illustrated example, the land portion 3a, land portion 3b, and land portion 3c are shaped increasingly along the tire circumferential direction in this order.

Furthermore, as illustrated in FIG. 1, the land portions 3a to 3c have an approximately rectangular shape in this planar view, and the width of the land portions 3a to 3c increases from one edge to the other edge in the extending direction of the land portions 3a to 3c. Here, there are two boundary lines between a land portion 3 and the two recesses 2 that define the land portion 3, and in this example, the extending direction of the land portions 3a to 3c refers to the direction of a straight line formed by connecting the midpoint between the adjacent ends of the boundary lines at one side and the midpoint between the adjacent ends at the other side.

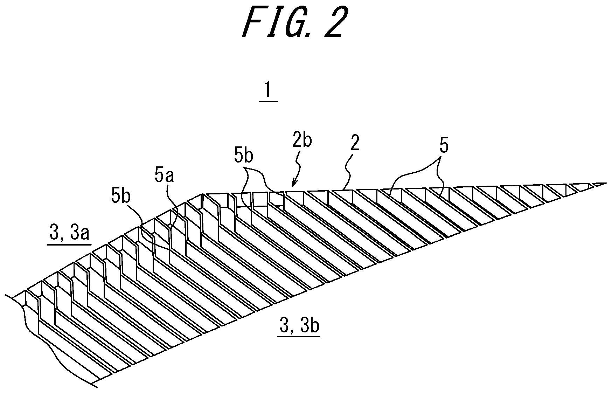

FIG. 2 is a perspective view illustrating an enlargement of a portion of the recess 2b in FIG. 1 and its surroundings. In the tire of the embodiment illustrated in FIG. 1, a plurality of ridges 5 (projections that project from the bottom of the recess 2) are provided within the recess 2. As illustrated in FIG. 2, the ridges 5 in this example are connected to the bottom and two sidewalls defined by the recess 2. In the example illustrated in FIG. 1, these ridges 5 are only provided in the recess 2, and are provided at approximately equal intervals from the outer edge to the inner edge in the tire radial direction. In the example illustrated in FIG. 1, a plurality of the ridges 5 are provided in all of the recesses 2a to 2d.

In the recess 2a, all of the ridges 5 are formed linearly, and none of the ridges 5 has a bending point. On the other hand, as illustrated in FIGS. 1 and 2, a plurality of ridges 5 that have from 0 to 2 bending points 5a and 5b are disposed in the recess 2b. In other words, in the recess 2b, along the boundary line between the land portion 3a and the recess 2b, a fundamental arrangement of ridges 5 having two bending points 5a and 5b is provided at positions adjacent to the land portion 3a, whereas linear ridges 5 with no bending point are provided in an area on the other side in the tire circumferential direction not adjacent to the land portion 3a. By providing ridges 5 that have one bending point 5b in another area between these two areas, the arrangement of ridges 5 is made smooth. In the illustrated example, the recess 2b is narrow furthest towards one side in the tire circumferential direction. Therefore, the ridges 5 at this position either only have one bending point 5b or have no bending point.

In the example illustrated in FIG. 1, the ridges 5 that have two bending points 5a and 5b have a shape such that in this planar view, two approximately parallel straight lines are connected by a straight line between the bending points 5a and 5b. The ridges 5 having only one bending point 5b have a shape such that, in this planar view, two straight lines with different inclination angles relative to the tire radial direction are connected by the bending point 5b.

As illustrated in FIG. 1, the ridges 5 in the recess 2c have a similar arrangement to that of the ridges 5 in the recess 2b. Namely, a fundamental arrangement of ridges 5 having two bending points 5a and 5b is provided adjacent to the land portion 3b, whereas linear ridges 5 with no bending point are provided in an area on the other side in the tire circumferential direction not adjacent to the land portion 3b. Ridges 5 that have one bending point 5b are arranged in another area between these two areas. In the illustrated example, the recess 2c is narrow in the portion near the edge on one side in the tire circumferential direction. Therefore, the ridges 5 at this position either only have one bending point 5b or have no bending point. Furthermore, as for the ridges 5 in the recess 2d, the ridges 5 at the other side in the tire circumferential direction are adjacent to the land portion 3c and have two bending points 5a and 5b. On the other hand, the recess 2d is narrow in the portion on one side in the tire circumferential direction, and therefore the ridges 5 in this portion either only have one bending point 5b or have no bending point.

In the example illustrated in FIG. 1, a virtual line (not illustrated) smoothly connecting the bending points 5a of each ridge extends in an arc adjacent to the land portion 3a along the boundary line between the land portion 3a and the recess 2b. Similarly, a virtual line (not illustrated) connecting the bending points 5b of each ridge also extends in an arc adjacent to the land portion 3a along the boundary line between the land portion 3a and the recess 2b. The same is also true for the bending points of the ridges 5 formed in the recess 2c and the recess 2d. As illustrated in FIG. 1, for the ridges 5 in the recesses 2a to 2d, the bending points are arranged in one direction within the recesses 2a to 2d from one edge to the other edge of the recesses 2a to 2d.

In this way, the tire of this embodiment includes a decoration band 4 formed on the outer surface of the sidewall portion 1, extending in the tire circumferential direction and comprising a plurality of recesses 2 and land portions 3 defined between the recesses 2. A plurality of ridges 5 are provided in the recesses 2, and at least a portion of the ridges 5 have a bending point.

The following describes the effects of the tire according to the First Embodiment.

According to the tire of this embodiment, first, since the decoration band 4 has a three-dimensional shape that includes the recesses 2 and the land portions 3, the undesired unevenness can be caused to blend in. In particular, in this embodiment, a portion of the ridges 5 arranged in the recesses 2 have a bending point. These bending points yield the visual effect of expressing the height of the land portions 3, which makes the shape of the land portions 3 appear more three-dimensional. As a result, the undesired unevenness of the sidewall portion can be made less noticeable while improving the appearance, such as the visibility, of the sidewall portion 1.

In this disclosure, as in the above embodiment illustrated in FIG. 1, the bending points are preferably arranged in one direction within the recesses 2 from one edge to the other edge of the recesses 2 (for example, in the recess 2d in FIG. 1, from the edge at one side in the tire circumferential direction to the edge at the other side). The reason is that along the entire recess 2 in the one direction (for example, in the recess 2d in FIG. 1, in the tire circumferential direction), the unevenness can be made less noticeable while improving the appearance of the sidewall portion 1.

In this disclosure, as in the embodiment illustrated in FIG. 1, the bending points are preferably arranged along the boundary lines between the land portions 3 and the recesses 2. The reason is that with the bending points, the land portions 3 can be caused to appear to have an approximately uniform height and can be provided with a three-dimensional visual effect. In this disclosure, as in the embodiment illustrated in FIG. 1, the bending points are preferably arranged towards the boundary line between the recess 2 and the land portion 3 from the central position of the recess 2 in the tire radial direction (for example, the bending points of the ridges 5 in the recess 2b are preferably arranged towards the boundary line between the recess 2b and the land portion 3a). The reason is that the visual effect of causing the land portion 3a to appear to be a land portion 3 with a steeper sidewall can thus be obtained.

Furthermore, in this disclosure, as in the embodiment illustrated in FIG. 1, the width of the land portion 3 preferably increases from one edge to the other edge in the extending direction of the land portion 3. The reason is that the greater the width of the land portion 3 is at a position, the closer the position appears to be, thus providing an even greater appearance of three-dimensionality.

In Embodiment 1 illustrated in FIG. 1, the recesses 2a to 2d all start in an area that is inward in the tire radial direction and on one side in the tire circumferential direction and extend from that area outward in the tire radial direction and towards the other side in the tire circumferential direction. Therefore, a slanted appearance is provided, expressing the land portions 3 more three-dimensionally.

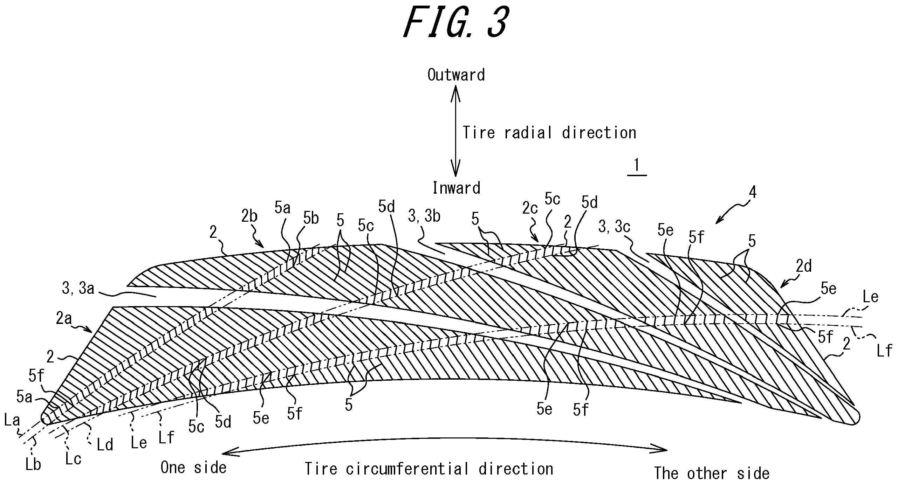

Next, FIG. 3 is a partial side view of the sidewall portion 1 of a pneumatic tire according to a Second Embodiment of this disclosure. As illustrated in FIG. 3, first, the tire of the Second Embodiment differs in that the shape of the recesses 2 and the land portions 3 of the decoration band 4 is reversed in the tire circumferential direction from the shape of the recesses 2 and the land portions 3 of the tire according to the First Embodiment illustrated in FIG. 1. Also, the tire according to the Second Embodiment illustrated in FIG. 3 differs from the tire according to the First Embodiment illustrated in FIG. 1 mainly in the structure of the ridges 5.

As illustrated in FIG. 3, in the Second Embodiment as well, a plurality of ridges 5 are disposed in each of the recesses 2a to 2d. In the illustrated example, each ridge 5 has from 0 to 6 bending points. As illustrated in FIG. 3, for example in the recess 2a, letting the bending points of the ridge 5 be bending points 5a, 5b, 5c, 5d, 5e, and 5f in this order from the outside toward the inside in the tire radial direction, virtual lines La to Lf smoothly connecting the bending points 5a to 5f respectively with each other extend so as to intersect the boundary line between the recess 2a and the land portion 3a adjacent to the recess 2a. As illustrated in FIG. 3, the bending points 5a and 5b, 5c and 5d, and 5e and 5f are respectively disposed adjacent to each other. Therefore, the virtual lines La and Lb, Lc and Ld, and Le and Lf respectively extend adjacent to each other.

The arrangement of the bending points 5a to 5f in the recess 2b is similar to the case of the recess 2a, except that the virtual lines La and Lb extend in a direction intersecting the boundary lines between the recess 2b and the land portion 3a adjacent to the recess 2b, and between the recess 2b and the sidewall portion 1. As illustrated in FIG. 3, the bending points 5a of the ridge 5 in the recess 2a and the bending points 5a of the ridge 5 in the recess 2b are disposed so as to trace the same virtual line La smoothly (so as to trace one arcuate curve). The same is true for the bending points 5b to 5f as well. Also, the bending points 5c to 5f of the ridge 5 in the recess 2c and the bending points 5c to 5f of the ridge 5 in the recesses 2a and 2b are also disposed so as to trace the same virtual lines Lc to Lf smoothly. Similarly, the bending points 5e and 5f of the ridge 5 in the recess 2d and the bending points 5e and 5f of the ridge 5 in the recesses 2a to 2c are also disposed so as to trace the same virtual lines Le and Lf smoothly. As illustrated in FIG. 3, in this planar view, the virtual lines La to Lf are drawn increasingly along the tire circumferential direction in the order La, Lb, Lc, Ld, Le, and Lf.

According to the tire of the Second Embodiment, as in the First Embodiment, the undesired unevenness can be caused to blend in, since the decoration band 4 has a three-dimensional shape that includes the recesses 2 and the land portions 3. Also, a portion of the ridges 5 disposed in the recesses 2 have a bending point. These bending points yield the visual effect of expressing the height of the land portions 3, which makes the shape of the land portions 3 appear more three-dimensional. As a result, the undesired unevenness of the sidewall portion can be made less noticeable while improving the appearance, such as the visibility, of the sidewall portion 1. Furthermore, in the tire of the Second Embodiment, the bending points are arranged along a direction intersecting the boundary line between the recess 2 and the land portion 3. Therefore, the recesses 2 are provided with a step-like visual effect, fostering an appearance of three-dimensionality. Also, the appearance of a three-dimensional dual structure can be expressed by the figure yielded by the recesses 2 and the figure yielded by the land portions 3.

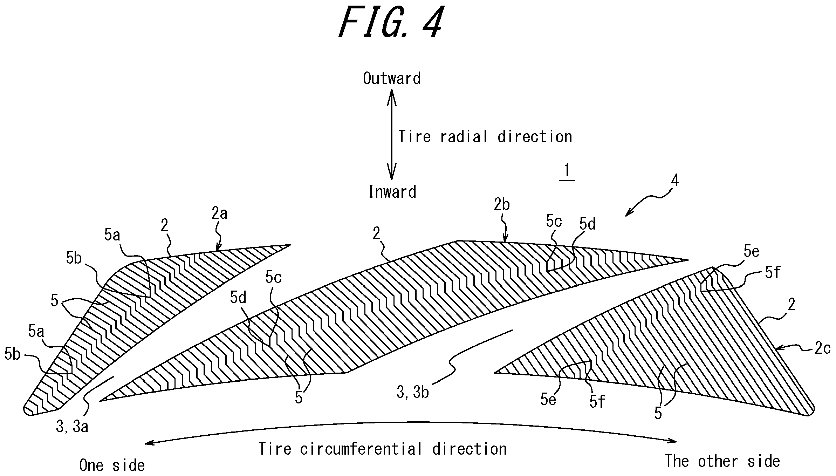

Next, FIG. 4 is a partial side view of the sidewall portion 1 of a pneumatic tire according to a Third Embodiment of this disclosure. As illustrated in FIG. 4, the decoration band 4 has three recesses 2a to 2c. In the illustrated example, the recesses 2a and 2c have an approximately triangular shape in this planar view, and the recess 2b approximately has the shape of a parallelogram in this planar view.

As illustrated in FIG. 4, the land portions 3a and 3b have an approximately rectangular shape in this planar view. The width of the land portion 3a increases gradually from one end to the other end in the extending direction of the land portion 3a. Similarly, the width of the land portion 3b increases gradually from one end to the other end in the extending direction of the land portion 3b. Here, there are two boundary lines between a land portion 3 and the two recesses 2 that define the land portion 3, and in this example, the extending direction of the land portions 3a and 3b refers to the direction of a straight line formed by connecting the midpoint between the adjacent ends of the boundary lines at one side and the midpoint between the adjacent ends at the other side.

As illustrated in FIG. 4, a plurality of ridges 5 are formed in each of the recesses 2a to 2c. In this example, each ridge 5 has from 0 to 2 bending points. Starting with the land portion 3a, in the two recesses 2a and 2b that define the land portion 3a, bending points 5a to 5d are disposed along the boundary lines between the recesses 2a and 2b and the land portion 3a, and the land portion 3a is configured to have, on both sides in the tire circumferential direction, virtual lines smoothly connecting these bending points 5a to 5d respectively to each other. Similarly for the land portion 3b, in the two recesses 2b and 2c that define the land portion 3b, bending points 5c to 5f are disposed along the boundary lines between the recesses 2b and 2c and the land portion 3b, and the land portion 3b is configured to have, on both sides in the tire circumferential direction, virtual lines smoothly connecting these bending points 5c to 5f respectively to each other. In the illustrated example, the land portion 3a and the land portion 3b are configured to share, on one side of each land portion in the tire circumferential direction, virtual lines smoothly connecting the bending points 5c and 5d respectively to each other.

According to the tire of the Third Embodiment, as in the First and Second Embodiments, the undesired unevenness can be caused to blend in, since the decoration band 4 has a three-dimensional shape that includes the recesses 2 and the land portions 3. Also, a portion of the ridges 5 disposed in the recesses 2 have a bending point. These bending points yield the visual effect of expressing the height of the land portions 3, which makes the shape of the land portions 3 appear more three-dimensional. As a result, the undesired unevenness of the sidewall portion can be made less noticeable while improving the appearance, such as the visibility, of the sidewall portion 1. Furthermore, in the Third Embodiment, the width of the land portions 3a and 3b gradually increases in the extending directions of the land portions 3a and 3b. Therefore, as the width increases, the land portions 3a and 3b appear closer to the observer, yielding an appearance of three-dimensionality. Also, virtual lines are disposed at both sides of the land portion 3a and the land portion 3b in the tire circumferential direction, thereby better expressing the three dimensionality of the land portions 3a and 3b.

In this disclosure, the height of the ridges 5 may be the same as or different from the height of the sidewall portion 1. When the height of the ridges 5 is set to be different from the height of the sidewall portion 1, an even more three-dimensional appearance can be provided. On the other hand, in order to lower the air resistance when the tire rotates, the ridges 5 may be set to the same height as the sidewall portion 1.

In the above-described embodiments, the bending points connect two linear portions of the ridges 5, but in this disclosure, the portion of the ridges 5 near the bending points may be curved. Furthermore, in the above embodiments, ridges 5 with two or more bending points are provided in some of the recesses 2, but it is also possible to provide only ridges 5 that have only one bending point in the recesses 2.

### EXAMPLES

In order to verify the effects of this disclosure, prototypes of tires according to Examples 1 to 3 and Comparative Examples 1 and 2 were prepared with different configurations of the decoration band in the sidewall portion. Example 2 is not according to the present invention. Tests were then performed to evaluate the noticeability of the unevenness of the sidewall portion and the visibility (conspicuity) of the sidewall portion. Table 1 below lists the specifications of each tire. Other specifications, such as the internal structure, were the same for each tire. Each tire has an undesired unevenness of approximately the same magnitude.

The following tests were performed on each of the above tires.

### <Noticeability of Unevenness>

The noticeability of the unevenness was evaluated based on an observer's subjective impression. The evaluation was made on a scale of 1 to 5, with a larger number indicating less noticeable unevenness.

### <Visibility of Decoration Band>

The visibility of the decoration band was evaluated based on an observer's subjective impression. The evaluation was made on a scale of 1 to 5, with a larger number indicating better visibility.

Table 1 below lists the evaluation results.

**[Table 1]**

| | Example 1 | Example 2 | Example 3 | Comparative Example 1 | Comparative Example 2 |
|---|---|---|---|---|---|
| FIG. | FIG. 1 | FIG. 3 | FIG. 4 | - | - |
| Decoration band 4 | includes recesses and land portions | includes recesses and land portions | includes recesses and land portions | includes recesses and land portions | only recesses |
| Ridges 5 | include bending points | include bending points | include bending points | do not include bending points | include bending points |
| Noticeability of unevenness | 4 | 5 | 4 | 3 | 2 |
| Visibility | 5 | 5 | 4 | 3 | 2 |

Table 1 clearly shows that as compared to the tire according to Comparative Examples 1 and 2, the unevenness of the sidewall portion was less noticeable and the visibility of the sidewall portion was better in the tire according to Examples 1 to 3.

### REFERENCE SIGNS LIST

- 1: Sidewall portion
- 2, 2a, 2b, 2c, 2d: Recess
- 3, 3a, 3b, 3c: Land portion
- 4: Decoration band
- 5: Ridge
- 5a, 5b, 5c, 5d, 5e, 5f: Bending point

## Claims

1. A pneumatic tire comprising:
a decoration band (4) formed on an outer surface of a sidewall portion (1), extending in a tire circumferential direction and comprising a plurality of recesses (2a, 2b, 2c, 2d) and land portions (3a, 3b, 3c) defined between the recesses (2a, 2b, 2c, 2d); and
a plurality of ridges (5) provided in each recess (2a, 2b, 2c, 2d);
wherein at least a portion of the ridges (5) each have a bending point (5a, 5b), **characterised by**, in a side view of the pneumatic tire, the bending points (5a, 5b) being arranged along a boundary line between the recess (2a, 2b, 2c, 2d) and the land portion (3a, 3b, 3c).

2. The pneumatic tire of claim 1, wherein in a side view of the pneumatic tire, the bending points (5a, 5b) are arranged in one direction within the recess (2a, 2b, 2c, 2d) from one edge to another edge of the recess (2a, 2b, 2c, 2d).

3. The pneumatic tire of claim 1 or 2, wherein the bending points (5a, 5b) are arranged towards the boundary line from a central position of the recess (2a, 2b, 2c, 2d) in the tire radial direction.

4. The pneumatic tire of any one of claims 1 to 3, wherein a width of the land portion (3a, 3b, 3c) increases from one edge to another edge in an extending direction of the land portion (3a, 3b, 3c).

## Patentansprüche

1. Luftreifen, der Folgendes umfasst:
ein Dekorationsband (4), das an einer Außenfläche eines Seitenwandabschnitts (1) geformt ist, wobei es sich in einer Reifenumfangsrichtung erstreckt und eine Vielzahl von Aussparungen (2a, 2b, 2c, 2d) und Stegabschnitten (3a, 3b, 3c), die zwischen den Aussparungen (2a, 2b, 2c, 2d) definiert sind, umfasst, und
eine Vielzahl von Graten (5), die in jeder Aussparung (2a, 2b, 2c, 2d) bereitgestellt sind,
wobei wenigstens ein Abschnitt der Grate (5) jeweils einen Biegungspunkt (5a, 5b) aufweist, **dadurch gekennzeichnet, dass**,
in einer Seitenansicht des Luftreifens, die Biegungspunkte (5a, 5b) entlang einer Grenzlinie zwischen der Aussparung (2a, 2b, 2c, 2d) und dem Stegabschnitt (3a, 3b, 3c) angeordnet sind.

2. Luftreifen nach Anspruch 1, wobei, in einer Seitenansicht des Luftreifens, die Biegungspunkte (5a, 5b) in einer Richtung innerhalb der Aussparung (2a, 2b, 2c, 2d) von einer Kante zu einer anderen Kante der Aussparung (2a, 2b, 2c, 2d) angeordnet sind.

3. Luftreifen nach Anspruch 1 oder 2, wobei die Biegungspunkte (5a, 5b) zu der Grenzlinie hin von einer mittigen Position der Aussparung (2a, 2b, 2c, 2d) in der Reifenradialrichtung angeordnet sind.

4. Luftreifen nach einem der Ansprüche 1 bis 3, wobei eine Breite des Stegabschnitts (3a, 3b, 3c) von einer Kante zu einer anderen Kante in einer Ausdehnungsrichtung des Stegabschnitts (3a, 3b, 3c) zunimmt.

## Revendications

1. Bandage pneumatique, comprenant :
une bande décorative (4) formée sur une surface externe d'une partie de flanc (1), s'étendant dans une direction circonférentielle du bandage pneumatique et comprenant plusieurs évidements (2a, 2b, 2c, 2d) et des parties d'appui (3a, 3b, 3c) définies entre les évidements (2a, 2b, 2c, 2d) ; et
plusieurs nervures (5) agencées dans chaque évidement (2a, 2b, 2c, 2d) ;
dans lequel au moins certaines des nervures (5) comportent chacune un point de flexion (5a, 5b) ; **caractérisé en ce que** :
dans une vue latérale du bandage pneumatique, les points de flexion (5a, 5b) sont agencés le long d'une ligne de délimitation entre l'évidement (2a, 2b, 2c, 2d) et la partie d'appui (3a, 3b, 3c).

2. Bandage pneumatique selon la revendication 1, dans lequel, dans une vue latérale du bandage pneumatique, les points de flexion (5a, 5b) sont agencés dans une direction à l'intérieur de l'évidement (2a, 2b, 2c, 2d), d'un bord vers un autre bord de l'évidement (2a, 2b, 2c, 2d).

3. Bandage pneumatique selon les revendications 1 ou 2, dans lequel les points de flexion (5a, 5b) sont agencés vers la ligne de délimitation, à partir d'une position centrale de l'évidement (2a, 2b, 2c, 2d), dans la direction radiale du bandage pneumatique.

4. Bandage pneumatique selon l'une quelconque des revendications 1 à 3, dans lequel une largeur de la partie d'appui (3a, 3b, 3c) est accrue d'un bord vers un autre bord, dans une direction d'extension de la partie d'appui (3a, 3b, 3c).
